Europäisches Patentamt

(19) European Patent Office

Office européen des brevets

(11) Publication number: **0 055 961**
**B1**

(12) **EUROPEAN PATENT SPECIFICATION**

(45) Date of publication of patent specification: **09.05.84**

(21) Application number: **81402068.1**

(22) Date of filing: **23.12.81**

(51) Int. Cl.³: **B 01 D 53/04, C 01 B 21/04**

(54) Repressurization process for pressure swing adsorption system.

(30) Priority: **29.12.80 US 221081**

(43) Date of publication of application:
**14.07.82 Bulletin 82/28**

(45) Publication of the grant of the patent:
**09.05.84 Bulletin 84/19**

(84) Designated Contracting States:
**AT BE CH DE FR GB IT LI LU NL SE**

(56) References cited:
**FR - A - 2 392 707**
**GB - A - 1 551 732**

(73) Proprietor: **CALGON CORPORATION**
**Route 60-Campbell's Run Road**
**Robinson Township Pennsylvania 15205 (US)**

(72) Inventor: **Vo, Toan P.**
**333 Oakville Drive Apt. 2A**
**Pittsburgh Pennsylvania 15220 (US)**

(74) Representative: **Corre, Jacques Denis Paul et al,**
**Cabinet Regimbeau 26, Avenue Kléber**
**F-75116 Paris (FR)**

Courier Press, Leamington Spa, England.

## Description

Background of the Invention

This invention relates to a method for obtaining in large volume a gas stream that is 90%—99% and higher by volume in one component of a binary gas mixture. This invention especially relates to an adsorption process for providing an enriched gas stream by means of a pressure swing adsorption system using carbon molecular sieves. More particularly, this invention relates to a method for providing an inexpensive and high volume source of gases such as nitrogen, hydrogen or methane, requiring less energy to operate than either cryogenic or other pressure swing adsorption systems, and yet supplying gases of comparable quality.

The term binary gas mixture, as used herein, refers to air and other gas mixtures primarily comprised of two components of different molecular size. The term enriched gas refers to a gas comprised of that component of the binary gas mixture relatively unadsorbed after passage of the binary gas mixture through an adsorbent.

A gaseous mixture may be fractionated, or separated, by pressure swing adsorption by passing the mixture at an elevated pressure through a bed of adsorbent which is selective in its capacity to adsorb one or more of the components of the mixture. This selectivity is governed by the pore size distribution in the adsorbent and the total pore volume. Thus, gas molecules with a kinetic diameter less than or equal to the pore size are retained, or adsorbed, on the adsorbent while gas molecules of larger diameters pass through the bed. The adsorbent, in effect, sieves the gas according to its molecular size.

As the gas travels through the adsorbent bed, the pores age filled with gas molecules. One can envision an adsorption front, moving through the bed, akin to the liquid adsorption front moving through a solid adsorbent in a column chromatography system. After some time, an insufficient number of pores are available to retain gas molecules. This is known as the breakthrough point, that is, the point at which adsorption has ceased and the gas exiting the bed is essentially the same in composition as the gas that entered the adsorbent. After this breakthrough point, the bed must be regenerated.

After treatment of the mixture to adsorb selected components therefrom, the flow of the gaseous mixture through the bed is interrupted and the adsorbent is regenerated for reuse by purging it of the adsorbed components either by vacuum or by passing through the bed, generally in the opposite direction of flow taken by the gaseous mixture, a purge gas stream which generally comprises a portion of the purified product at a low pressure.

Pressure swing absorption usually includes at least two beds of adsorbent so that while one bed is being regenerated, the other is in the adsorption phase producing product gas. Thus, by cycling between the beds product gas is obtained constantly.

The recover of oxygen enriched air utilizing an adsorption process employing siliceous or carbon containing adsorption agents and involving the use of temperature or pressure changes during adsorption and desorption is well known. Certain silicates, as for example zeolites, are effective for preferably adsorbing nitrogen from its mixtures with oxygen so that by conducting air through a zeolite filled column, the first issuing gas is effectively enriched in oxygen content. The regeneration of zeolites however requires considerable expense in terms of energy and apparatus.

A well known process is the use of carbon molecular sieves for the production of enriched nitrogen from air. These sieves possess a pore structure with a size comparable to the kinetic diameter of oxygen. When' used in a pressure swing adsorption system, these sieves selectively adsorb oxygen from a gas mixture, allowing other components to pass.

A four bed pressure swing adsorption unit has been successfuly employed in the separation of hydrogen gas from its mixture with carbon dioxide, water and light aliphatic hydrocarbons.

Also well known is the fractionation of other binary gas mixtures by pressure swing adsorption. For example, carbon monoxide from its mixture with hydrogen using zeolite 13X and carbon dioxide from its mixture with fuel gas mixtures using charcoal, alumina or silica.

Binary gas mixtures of argon and oxygen or helium and methane have been separated on an adsorbent of partially oxidized carbon in a pressure swing adsorption process.

Typical problems in the present invention molecular sieve technology include; low yield of product gas, large amounts of molecular sieve required and energy inefficient regeneration methods.

Summary of the Invention

The object of this invention is to provide a novel method of repressurization for a two column pressure swing adsorption system containing molecular sieve carbon as the adsorbent. This method provides a good yield of enriched gas in addition to overcoming the prior art problems regarding energy consumption in the regeneration of the adsorbent. Thus there is provided an adsorption process for the generation of a stream of enriched gas which comprises the sequential steps of passing a binary gas mixture at a pressure in the range of 3.0—8.0 bars, hereinafter referred to as the adsorption pressure, through one adsorption column yielding enriched gas, prior to breakthrough, passing the remaining gas from this column into the inlet end of a second adsorption column thereby partially pressurizing the second column in a range of 40—90% of the adsorption pressure, further pressurizing the second column to the adsorption pressure by the introduction of enriched gas through the outlet end of the column while simultaneously venting the first column to atmospheric pressure, passing the binary gas mixture through the second adsorption column to yield enriched gas while regenerating the first column by the use of vacuum applied to the inlet end of the column in the range of 9,3—13,3 kPa (70—100 torr) and repeating the cycle upon reaching an undesirable level of unadsorbed gas.

Brief Description of the Drawing

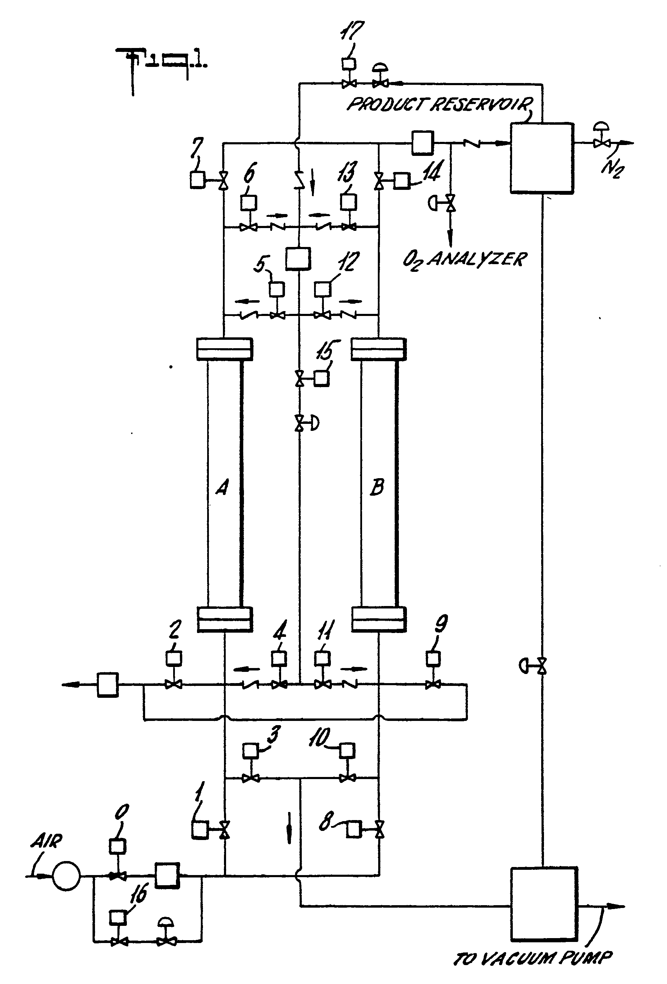

FIG. 1 is a schematic representation of one apparatus capable of employing the novel repressurization process described herein.

Detailed Description

The system for employing the novel repressurization technique of this invention can be better understood by reference to the accompanying drawing, which shows a two column pressure swing adsorption unit for the fractionation of a binary gas mixture in accordance with this invention. Although the present invention is described and illustrated in connection with a preferred embodiment, it is to be understood that modifications and variations may be used without departing from the spirit of the invention. For example, any binary gas mixture including, but not limited to, air (nitrogen and oxygen), methane and carbon dioxide, or hydrogen and carbon monoxide will suffice.

Referring to the drawing in detail, there is shown two pressure resistant columns A and B, each of which is filled with a bed of carbon molecular sieve suitable for the fractionation of nitrogen from air.

The series of valves connecting the pressure resistant columns A and B may be defined by the number shown in the drawing and by the function performed in this one preferred arrangement:

(a) Valves 0 & 16 — main air flow valves.

(b) Valves 1 & 8 — inlet air valves to columns A & B. respectively.

(c) Valves 3 & 10 — regeneration valves-vacuum pump for columns A & B.

(d) Valves 2 & 9 — purge valves — release column pressure for columns A & B.

(e) Valves 7 & 14 — product flow valves — from columns A & B.

(f) Valves 5, 12 & 17 — backfilling valves — product quality gas introduced into outlet end of columns A & B after regeneration.

(g) Valves 4, 6, 11, 13 & 15 — breakthrough gas connection between outlet of one column and inlet of other column.

While housings A and B are shown in the vertical position, they may be installed in either the horizontal or vertical position without adverse effect to the mode of operation.

Ambient air is dried and compressed and introduced into the system via either valve 0 or valve 16. When compressed air is fed via valve 0, the mass flow rate of the air is controlled by a mass flow controller at a pressure equal to that of the carbon bed. When air is fed via the valve 16, its mass flow rate is not regulated; however, its pressure at the outlet of this valve is essentially the same as that at the outlet of the columns.

The ambient air may be modified, prior to adsorption, by passing it through a condenser to remove excess humidity as a relative humidity of less than 40% is preferred. Also, a filter or scrubber may be employed to remove other gases such as carbon dioxide, sulfur dioxide or oxides of nitrogen. These steps improve the purity of the exiting gas stream and are employed when the specification for 100% pure nitrogen mandates such prior removal. They are however auxiliary and not requisite to the successful operation of this invention.

Feed air is admitted to either column A or column B at the adsorption pressure via valve 0 and either valve 1 or valve 8 to selectively sieve oxygen and the feed air is pushed upward through the carbon sieve bed. Product nitrogen gas is discharged from column A or column B via either valve 7 or valve 14 respectively. The instantaneous product nitrogen flow rate is measured by a mass flow meter and the product gas oxygen content is analyzed upstream from the product reservoir. A stream of product nitrogen gas is discharged from the product reservoir to keep its pressure constant.

When one carbon bed is generating product nitrogen gas, the other bed is being regenerated by vacuum applied via valves 3 or 10. Thus, while column A is producing nitrogen via open valves 0,1 and 7, column B is being regenerated by vacuum in the range of 9,3—13,3 kPa (70—100 torr) via open valve 10.

When analysis of the product nitrogen gas oxygen content shows that an undesirable level of oxygen, for example greater than 5%, has been reached valves 0 and 7 or valves 0 and 14 are closed and valve 16 is opened. Feed air is still admitted into column A or column B via valves 1 or 8 respectively. The exiting gas from the column flows through either valves 6, 15 and 11 or valves 13, 15 and 4 to the inlet end of the column B or column A. This exiting gas is used to partially pressurize the column to a range of 40—90%, preferably 60—80%, of the adsorption pressure. After this step the column is further pressurized to the adsorption pressure by the introduction of product nitrogen gas via valves 17 and 12 for column B, or valves 17 and 5 for column A. During this time the first column is returned to atmospheric pressure by venting through valves 2 or 9. The pressurized column now receives feed air via valve 0 and either valve 8 or valve 1 and product gas is released via valves 14 or 7. While one bed is producing nitrogen gas, the other bed is being regenerated by the application of vacuum in the range of 9,3—13,3 kPa (70—100 torr) via valve 3 or valve 10. Then the cycle is repeated when the oxygen content of the product gas from the second column reaches an undesirable level again.

**Claims**

1. An adsorption process for producing an enriched gas stream characterised in that it comprises the sequential steps of:

(a) passing a binary gas mixture, at an adsorption pressure in the range of 3.0—8.0 bars through a first adsorption bed of carbon molecular sieves to yield enriched gas;

(b) prior to breakthrough admitting the exiting gas mixture from the outlet end of said first adsorption bed into the inlet end of a second adsorption bed of carbon molecular sieves to partially pressurize said second adsorption bed in the range of about 40—90% of said adsorption pressure;

(c) further pressurizing said second adsorption bed to said adsorption pressure by introducing enriched gas into the outlet end of said second adsorption bed, while concomitantly venting said first adsorption bed to atmospheric pressure through its inlet end;

(d) passing said binary gas mixture through said second adsorpton bed to yield enriched gas while regenerating said first adsorption bed by application of vacuum to the inlet end of said first bed in the range of 9,3—13,3 kPa (70—100 torr);

(e) repeating the sequence prior to breakthrough.

2. The adsorption process of claim 1 wherein the binary gas mixture is air and the enriched gas is nitrogen.

3. The adsorption process of claims 1 or 2 wherein the exiting gas is admitted to partially pressurize the second adsorption bed to about 70% of the adsorption pressure.

**Revendications**

1. Un procédé d'adsorption pour produire un courant gazeux enrichi caractérisé en ce qu'il comporte les étapes séquentielles qui consistent:

a) à faire passer un mélange gazeux binaire, à une pression d'adsorption comprise dans l'intervalle de 3,0 à 8,0 bars, à travers un premier lit d'adsorption de tamis moléculaire de charbon pour produite un gaz enrichi;

b) avant la percée, à admettre le mélange gazeux sortant de l'extrémité de sortie dudit premier lit d'adsorption dans l'extrémité d'entrée d'un second lit d'adsorption de tamis moléculaire de charbon pour mettre partiellement sous pression ledit second lit d'adsorption à une pression comprise dans l'intervalle d'environ 40 à 90% de ladite pression d'adsorption;

c) à mettre plus complètement sous pression ledit second lit d'adsorption jusqu'a la pression d'adsorption en introduisant du gaz enrichi dans l'extrémité de sortie dudit second lit d'adsorption tout en évacuant en même temps ledit premier lit d'adsorption à la pression atmosphérique par son extrémité d'entrée;

d) à faire passer ledit mélange gazeux binaire à travers ledit second lit d'adsorption pour produire du gaz enrichi tout en régénérant en même temps ledit premier lit d'adsorption par application, à l'extrémité d'entrée dudit premier lit, d'un vide compris dans l'intervalle de 9,3 à 13,3 kPa (70 à 100 torrs);

e) à répéter la séquence avant la percée.

2. Le procédé d'adsorption de la revendication 1, dans lequel le mélange gazeux binaire est de l'air et le gaz enrichi est de l'azote.

3. Le procédé d'adsorption de la revendication 1 ou 2, dans lequel le gaz sortant est admis pour mettre partiellement sous pression le second lit d'adsorption à environ 70% de la pression d'adsorption.

**Patentansprüche**

1. Adsorptionsverfahren zur Erzeugung eines angereicherten Gasstroms, dadurch gekennzeichnet, dass es die aufeinanderfolgenden Verfahrensstufen umfasst: (a) Leiten eines binären Gasgemisches bei einem Adsorptionsdruck im Bereich von 3,0 bis 8,0 bar durch ein erstes Adsorptionsbett aus Kohlenstoff-Molekularsieben, um ein angereichertes Gas zu erhalten;

b) vor dem Durchbruch dem aus dem Auslassende des ersten Adsorptionsbettes austretenden Gasgemisch Zutritt in das Einlassende eines zweiten Adsorptionsbettes aus Kohlenstoff-Molekularsieben zu gestatten, um dieses zweite Adsorptionsbette einem Partialdruck im Bereich von etwa 40 — 90% des genannten Adsorptionsdruckes zu unterwerfen;

(c) das zweite Adsorptionsbett durch Einleiten von angereichertem Gas in das Auslassende des zweiten Adsorptionsbettes auf dem genannten Adsorptionsdruck zu halten, während gleichzeitig das erste Adsorptionsbett durch sein Einlassende zum atmosphärischen Druck entlüftet wird;

(d) das binäre Gasgemisch durch das zweite Adsorptionsbett zu leiten, um angereichertes Gas zu erhalten, während das erste Adsorptionsbett durch das Anlegen eines Vakuums im Bereich von 9,3 — 13,3 kPa (70 — 100 torr) an das Einlassende des ersten Bettes regeneriert wird;

e) die Reihenfolge vor dem Durchbruch zu wiederholen.

2. Adsorptionsverfahren nach Anspruch 1, bei welchem das binäre Gasgemisch Luft und das angereicherte Gas Stickstoff ist.

3. Adsorptionsverfahren nach den

7 **0 055 961** 8

Ansprüchen 1 oder 2, bei welchem es dem austretenden Gas ermöglicht wird, das zweite Adsorptionsbett auf einen Partialdruck von etwa 70% des Adsorptionsdruckes zu bringen.

Fig.1.

PRODUCT RESERVOIR

N₂

O₂ ANALYZER

A          B

AIR

TO VACUUM PUMP